(19) Europäisches Patentamt
European Patent Office
Office européen des brevets

(11) **EP 1 746 452 A1**

(12) **EUROPEAN PATENT APPLICATION**
published in accordance with Art. 158(3) EPC

(43) Date of publication:
**24.01.2007 Bulletin 2007/04**

(21) Application number: **05739329.0**

(22) Date of filing: **11.05.2005**

(51) Int Cl.:
*G02B 26/10* (2006.01)   *B41J 2/44* (2006.01)
*B81B 3/00* (2006.01)   *H04N 1/113* (2006.01)

(86) International application number:
**PCT/JP2005/008621**

(87) International publication number:
**WO 2005/109076 (17.11.2005 Gazette 2005/46)**

(84) Designated Contracting States:
**DE FR GB**

(30) Priority: **11.05.2004   JP 2004141092**

(71) Applicant: **SUMITOMO PRECISION PRODUCTS COMPANY LIMITED**
**Amagasaki-shi,**
**Hyogo Prefecture 660-0891 (JP)**

(72) Inventors:
• **KAWAKAMI, Y.,**
**SUMITOMO PRECISION PRODUCTS CO., LTD**
**Amagasaki-shi, Hyogo 6600891 (JP)**

• **SHIMODA, K.,**
**SUMITOMO PRECISION PRODUCTS CO., LTD**
**Amagasaki-shi, Hyogo 6600891 (JP)**

(74) Representative: **Jackson, Martin Peter et al**
**J.A. Kemp & Co.,**
**14 South Square,**
**Gray's Inn**
**London WC1R 5JJ (GB)**

(54) **ELECTROSTATIC DRIVE TYPE MEMS MIRROR SCANNER**

(57)    An object of the present invention is to provide an MEMS mirror scanner capable of achieving a scanning operation at a speed equivalent to or higher than a polygon mirror scanner and including a supporting structure for a flexible mirror, which can be driven even by drive force having a small electrostatic force. A scanning mirror is formed between a pair of suspension beams formed in a rod-like manner and arranged on the same straight line on a substrate and is oscillatably supported by using the straight line as an oscillation axis, and further, an electrostatic capacity drive unit is disposed along either side or both sides of the suspension beam. A maximum distance in an direction perpendicular to oscillation axis, that is, a direction of a width of the suspension beam from a center of an oscillation axis of the electrostatic capacity drive unit is, for example, 60% or less, more preferably, 40% or less of a maximum distance in an direction perpendicular to oscillation axis, that is, a direction of a length of the mirror from a center of an oscillation axis, that is, a rotational center of the mirror, thereby increasing a resonance frequency of the large scanning mirror.

Fig.1A

## Description

## Technical field

The present invention relates to a small-sized mirror scanner suitable for the use of a laser printer capable of scanning at a high speed and, more particularly, to a novel electrostatic drive type MEMS mirror scanner with micro-electro-mechanical system (hereinafter abbreviated as "MEMS") by using a silicon substrate.

## Background art

As a device for use in a scanner engine for a laser printer or the like has been conventionally used a polygon mirror scanner, in which a polyprismatic mirror can be rotated on its axis at a high speed, thereby achieving a scanning operation at a high speed, as disclosed in patent document 1.

In recent years, there have been proposed various kinds of electrostatic drive type mirror scanners, in which a scanning mirror configured by forming, for example, a required groove on a semiconductor substrate made of silicon or the like by a micro machining technique such as etching or film formation is oscillatably supported by suspension beams, and further, a pair of electrodes disposed around a mirror unit and the groove generate electrostatic force, thereby oscillatably moving the mirror, as disclosed in patent documents 2 and 3.

The above-mentioned electrostatic drive type mirror scanner has been literally driven by the electrostatic force, and can change a reflection channel of an incident light according to a turning angle on an axis of a suspension beam, thereby carrying out switching or scanning of a laser beam. However, the drive speed has been much lower than that in the polygon mirror scanner.

In contrast, an electromagnetic drive type mirror scanner including a basic structure consisting of magnetic field generating means for generating a parallel magnetic field and a scanning mirror oscillatably supported by a rod-like torsion hinge has had a large drive force of an electromagnetic type, thereby giving an advantage that a deflection angle and an operating frequency can be readily enhanced.

In addition, in the electromagnetic drive type mirror scanner which has adopted a configuration of an optical deflector of a gimbal structure and has included a silicon substrate and a deflection mirror device array having a plurality of polyimide films and metallic films laminated thereon and arranged in the parallel magnetic field, the use of the polyimide film having a mesh acting as an elastic member has given a resonance frequency of 4,000 Hz in a mirror size of, for example, 4.5 mm $\times$ 3.3 mm, so as to achieve a scanning operation at a high speed, as disclosed in patent documents 4.

Patent document 1: JP1993-119279A
Patent document 2: JP2002-311376A
Patent document 3: JP2003-015064A
Patent document 4: JP2003-270558A

## Disclosure of the invention

## Problems to be solved by the invention

An MEMS mirror scanner, which comprises a mirror formed in a size of several mm square with the silicon substrate and the mirror is oscillatably supported by suspension beams, can be more readily miniaturized than a polygon mirror scanner, can be reduced in size of an optical system and in number of lenses, and further, can be free from dust generation owing to no rotating body, with various advantages of reduction in electric power consumption, a reduced noise, a low vibration, a short starting time and the like.

In order to achieve a scanning operation at a speed equivalent to or higher than the polygon mirror scanner, it has been necessary to enlarge a mirror in the MEMS mirror scanner and actuate the MEMS mirror scanner at a high speed and a high amplitude.

In order to use the MEMS mirror scanner for a laser printer, a large scanning mirror has been required to achieve an adequate printing resolution. Therefore, inertia moment in a mirror unit has been increased according to the larger size of the scanning mirror, thereby reducing a resonance frequency. Thus, no electrostatic drive type MEMS mirror scanner has been yet in actual use.

Moreover, in order to actuate an MEMS mirror scanner having a large scanning mirror at a higher speed, that is, at a higher frequency, the rigidity of a torsion hinge, for example, has needed to be increased. However, if the rigidity of the torsion hinge is increased, there has arisen a problem that the mirror cannot be driven at a sufficiently operating amplitude due to a low drive force of the electrostatic type. This also is because no electrostatic drive type MEMS mirror scanner has been yet in actual use.

**Means for solving the problems**

An object of the present invention is to provide a configuration of an electrostatic drive type MEMS mirror scanner capable of achieving a scanning operation at a speed equal to or higher than that in a polygon mirror scanner. For example, an object of the present invention is to provide an MEMS mirror scanner including a supporting structure for a flexible mirror, which can be driven even by drive force having a small electrostatic force so as to achieve sufficient driving even by the electrostatic force, and being capable of increasing and securing an electrostatic capacity in order to increase the drive force.

The inventors have earnestly studied with the aim of achieving a flexible mirror supporting structure which can be driven even by drive force having a small electrostatic force and a configuration capable of securing a satisfactorily electrostatic capacity. As a result, on the assumption of a square scanning mirror having a required dimension, a mirror has been oscillatably supported by a pair of, that is, two suspension beams in directions of two sides facing to each other, and further, comb tooth-like electrodes have been continuously arranged in the direction of the suspension beam, that is, in a direction of an oscillation axis, thereby providing an electrostatic capacity drive unit. In this manner, it has been found that a resonance frequency of the mirror can be basically increased, so as to increase the electrostatic capacity in the drive unit.

In addition, the inventors have found that the resonance frequency of the large scanning mirror can be increased by setting a dimension in a direction perpendicular to the direction of the oscillation axis of the mirror to 1 mm or more in the above-described configuration including the scanning mirror and the suspension beam, and further, by setting a maximum distance from the center of the oscillation axis of the electrostatic capacity drive unit in an direction perpendicular to oscillation axis, that is, in a suspension beam width direction, to 10% or less, preferably, to 60% or less, and more preferably, to 40% or less of a maximum distance from the center of the oscillation axis, that is, the center of rotation of the mirror, in an direction perpendicular to oscillation axis, that is, in a mirror length direction.

Additionally, the inventors have found that the mirror oscillatably supported by the pair of, i.e., two suspension beams is formed into a rectangle rather than a square, and then, the resonance frequency can be more increased by disposing longer suspension beams on longer sides, and further, that the mirror is formed into an ellipse or a prolate ellipsoid rather than the rectangle, thereby reducing a mass at an outermost portion, so as to more increase the resonance frequency.

Furthermore, the inventors have studied various configurations capable of securing the drive force of the large scanning mirror in the above-mentioned MEMS mirror scanner. As a result, the inventors have found that the object can be achieved with a configuration which is longer in the oscillation axis direction in such a manner that the electrostatic force in the drive unit becomes the square of a polar moment of inertia of the mirror, an oscillation angle and a frequency since the size in the rotational oscillation direction of the electrostatic capacity drive unit falls within the above-mentioned range.

Moreover, the inventors have found that the resonance frequency can be increased by disposing a torsion hinge consisting of a serpentine torsion hinge/spring in the suspension beam without increasing the rigidity of each of the suspension beams. Or in the case of the necessity of a greater amplitude, the resonance frequency of the mirror can be increased and the great oscillation angle can be achieved by containing a device having the above-described configuration in a vacuum package so as to increase a Q factor of resonance or by forming a shallow hole at a reverse surface in the mirror unit or providing a rib structure so as to reduce the inertia moment in the mirror unit. Thus, the inventors have reached the present invention.

That is to say, according to the present invention, in an electrostatic drive type MEMS mirror scanner configured such that a scanning mirror is formed between a pair of suspension beams formed in a rod-like manner and arranged on the same straight line on a substrate and is oscillatably supported by using the straight line as the oscillation axis, and further, an electrostatic capacity drive unit is disposed along either side or both sides of the suspension beam, a maximum distance (a/2) in an direction perpendicular to oscillation axis from a center of the oscillation axis of the mirror is 1 mm or more; the thickness of the mirror per se is 50 $\mu$m or more; and a maximum distance (w) in the direction perpendicular to oscillation axis from a center of an oscillation axis of the drive unit is 100% or less of the maximum distance in the direction perpendicular to oscillation axis from the center of the oscillation axis of the scanning mirror.

Incidentally, the scanning mirror may be configured in various structures including, for example, a bulk substrate per se, a lateral H type, i.e., an I-beam, as viewed in cross section, a hole or various kinds of ribs, wherein the entire thickness of the structure is 50 $\mu$m or more.

**Effects of the invention**

The electrostatic drive type MEMS mirror scanner according to the present invention has a supporting structure for a flexible scanning mirror which can be driven even by drive force having a small electrostatic force. Furthermore, an electrostatic capacity drive unit is arranged along a longer suspension beam, thereby securing a sufficient electrostatic capacity. Therefore, a polygon mirror scanner can be replaced with the electrostatic drive type MEMS mirror scanner. In addition, since there is no rotating body, the electrostatic drive type MEMS mirror scanner can be free from dust generation, thus reducing the size more than conventional size, so as to miniaturize the optical system and reduce the number of lens, save power consumption, eliminate noise, and shorten a starting time.

Moreover, in the electrostatic drive type MEMS mirror scanner according to the present invention, a large scanning mirror having a mirror length of 4 mm or more, in particular, a large-sized mirror in conformity with the shape of a laser beam in the form of an ellipse or a prolate ellipsoid for use in a laser printer can be driven at a resonance frequency of 1.5 kHz or higher and an amplitude of $\pm 15°$ or higher, thus achieving performance such as 300 dpi or 600 dpi which is required in the laser printer.

Additionally, the electrostatic drive type MEMS mirror scanner according to the present invention is fabricated by using a micro machining technique such as etching or film formation on a semiconductor substrate made of silicon or the like, and further, a DC power source or an AC power source for electrostatically driving or controlling also can be formed on the substrate. Therefore, the electrostatic drive type MEMS mirror scanner according to the present invention can be more simply configured with a more excellent fabricating performance than the polygon mirror scanner or the electromagnetic drive type MEMS mirror scanner, with an advantage of a reduced cost.

In addition, the electrostatic drive type MEMS mirror scanner according to the present invention has the configuration which can be utilized without increasing the rigidity of the suspension beam made of the same material formed on the semiconductor substrate made of silicon or the like. For example, the electrostatic drive type MEMS mirror scanner is excellent in operating stability, in particular, is free from jitter in comparison with conventional configuration for use in a torsion hinge made of a polyimide film.

**Brief description of the drawings**

Fig. 1A is a perspective view showing an electrostatic drive type MEMS mirror scanner in a preferred embodiment according to the present invention.
Fig. 1B is a view explanatory of an upper plate of the mirror scanner shown in Fig. 1A.
Fig. 1C is a view explanatory of a lower plate of the mirror scanner shown in Fig. 1A.
Fig. 2A is a perspective view showing an electrostatic drive type MEMS mirror scanner in another preferred embodiment according to the present invention.
Fig. 2B is a view explanatory of an upper plate of the mirror scanner shown in Fig. 2A.
Fig. 2C is a view explanatory of a lower plate of the mirror scanner shown in Fig. 2A.
Fig. 3 is a top view showing an electrostatic drive type MEMS mirror scanner in a further preferred embodiment according to the present invention.
Fig. 4A is a perspective view showing an electrostatic drive type MEMS mirror scanner in a still further preferred embodiment according to the present invention.
Fig. 4B is a perspective view explanatory of an upper plate of the mirror scanner shown in Fig. 4A.
Fig. 4C is a top view explanatory of the upper plate of the mirror scanner shown in Fig. 4A.
Fig. 4D is a perspective view explanatory of a lower plate of the mirror scanner shown in Fig. 4A.
Fig. 4E is a view explanatory of the lower plate of the mirror scanner shown in Fig. 4A.
Fig. 4F is a perspective view explanatory of a lower side of the mirror scanner shown in Fig. 4A.
Fig. 5 is a top view showing an electrostatic drive type MEMS mirror scanner in a further preferred embodiment according to the present invention.
Fig. 6A is a perspective view showing an electrostatic drive type MEMS mirror scanner in a further preferred embodiment according to the present invention.
Fig. 6B is a perspective view explanatory of an upper plate of the mirror scanner shown in Fig. 5A.
Fig. 6C is a top view explanatory of the upper plate of the mirror scanner shown in Fig. 5A.
Fig. 6D is a perspective view explanatory of a lower plate of the mirror scanner shown in Fig. 5A.
Fig. 6E is a view explanatory of the lower plate of the mirror scanner shown in Fig. 5A.
Fig. 6F is a perspective view explanatory of a lower side of the mirror scanner shown in Fig. 6A.

**Reference numerals**

10, 20, 30, 40, 100: MEMS device
10A, 20A, 31, 50, 131: Upper plate

10B, 20B, 70, 170: Lower plate
11, 21, 32, 51, 132, 151: Scanning mirror
12, 22, 53, 153: Connecting portion
13A, 13B, 23A, 23B, 33A, 33B, 54A, 54B, 133A, 133B, 154A, 154B: Suspension beam
14A to 14H: Anchor
15A, 15H, 25a, 25h, 56a to 56f, 156a to 156f: Hinge
15B to 15G, 25b to 25g: Spring
16A to 16H, 76A, 76B, 77, 176A, 176B, 177: Fixing pad
17: Cavity
18, 18B, 28, 55, 155: Comb teeth on oscillation side
19, 29, 59, 78, 159, 178: Comb teeth on fixed side
34a to 341, 134a to 1341: Serpentine torsion hinge
35, 36, 135, 136: Group of comb teeth
52A, 52B, 74, 79a, 79b, 152A, 152B, 174, 179a, 179b: Gap
57A, 57B, 58A, 58B, 61, 157A, 157B, 158A, 158B, 161: Adhesive pad
60, 160: Hole
71, 171: Prolate elliptic plate
72, 172: Projection
73, 173: Mirror lower layer
75, 175: Mark

**Best modes carrying out the invention**

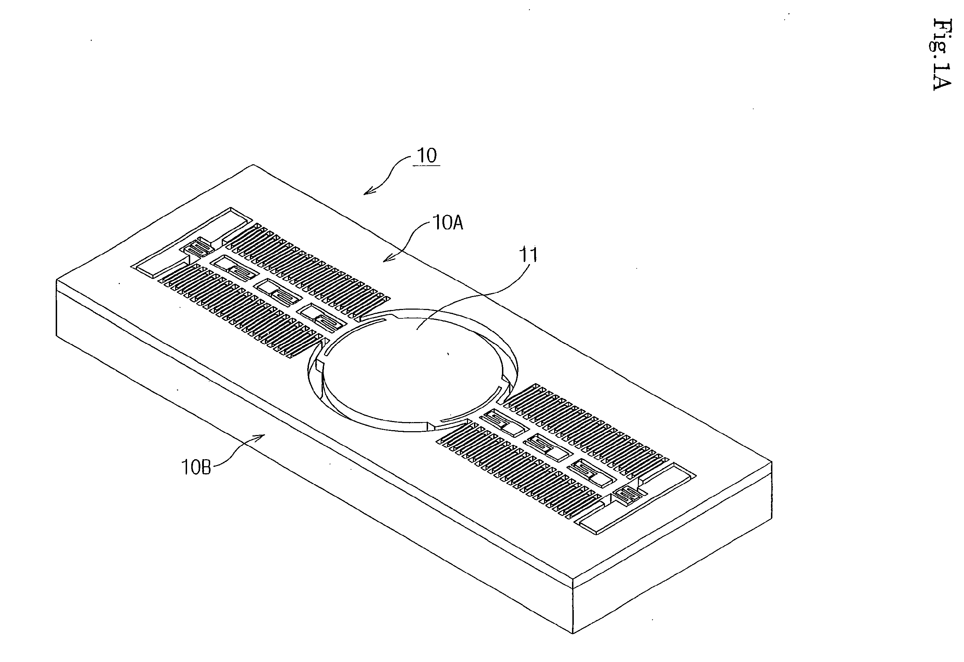

An electrostatic drive type MEMS mirror scanner according to the present invention has a basic structure, in which a scanning mirror is disposed between a pair of suspension beams arranged on the same straight line on the semiconductor substrate made of silicon or the like, and further, the mirror can be oscillatably supported on the straight line acting as the oscillation axis, as shown in Fig. 1A.

Moreover, the electrostatic drive type MEMS mirror scanner according to the present invention is featured in that an electrostatic capacity drive unit is arranged along the suspension beam, wherein a maximum distance from the center of the oscillation axis of the drive unit in an direction perpendicular to oscillation axis is set to 100% or less, preferably, to 60% or less, and more preferably, to 40% or less of a maximum distance from the center of the oscillation axis of the scanning mirror in the direction perpendicular to oscillation axis.

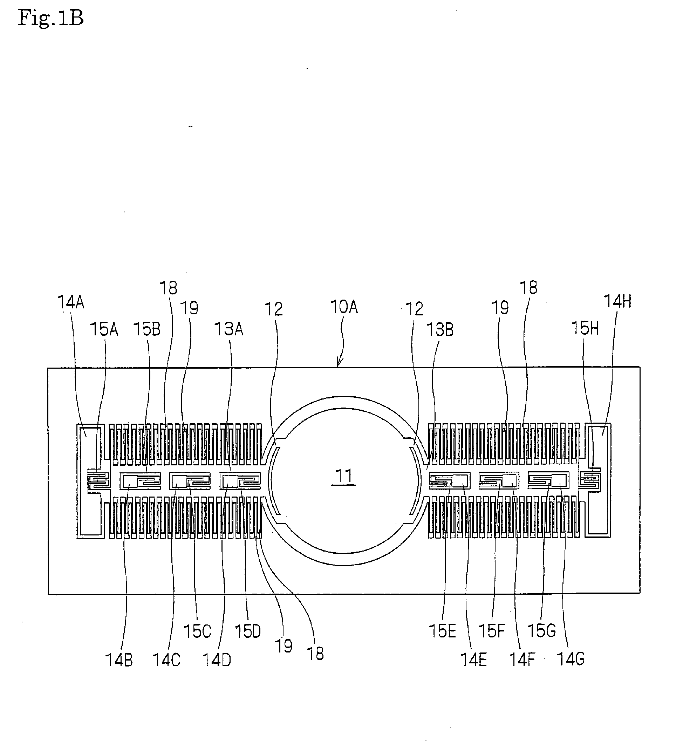

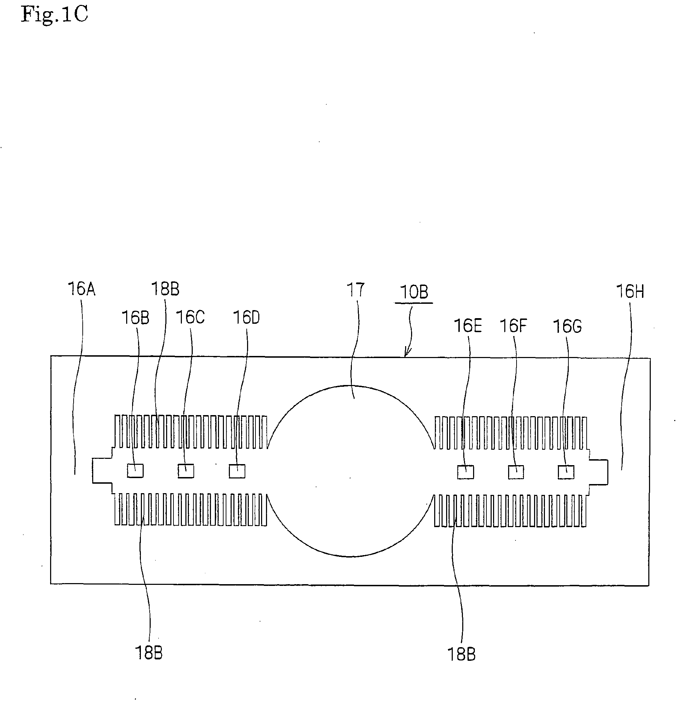

Referring to the accompanying drawings, a description will be given below of a configuration and a design of an MEMS mirror scanner device (hereinafter simply referred to as "an MEMS device") according to the present invention. Fig. 1A shows one constitutional example of an assembled MEMS device; and Figs. 1B and 1C are exploded views explanatory of an assembly shown in Fig. 1A.

An MEMS device 10 is constituted by laminating an upper plate 10A and a lower plate 10B. On the upper plate 10A, a disk scanning mirror 11 is located at the center thereof, and further, suspension beams 13A and 13B are disposed in a direction of an x-axis, i.e., an oscillation axis of the scanning mirror 11. In this manner, the scanning mirror 11 is supported by the suspension beams 13A and 13B via connecting portions 12.

The suspension beams 13A and 13B are connected at the ends thereof to anchors 14A and 14H and hinges 15A and 15H of an S-shaped, i.e., swirl-like torsion bar structure, respectively. The suspension beams 13A and 13B are provided with springs 15B to 15G of an S-shaped, i.e., swirl-like torsion bar structure inside of the beams between the connecting portions 12 and the hinges 15A and 15H. The springs 15B to 15G are connected to anchors 14B to 14G, respectively.

Comb teeth 18 on an oscillation side are formed in a y-axis direction perpendicular to the x-axis, i.e., the oscillation axis on the suspension beams 13A and 13B on the upper plate 10A. In the same manner, comb teeth 19 on a fixed side, extending in the y-axis direction from the side of the upper plate 10A and the comb teeth 18 on the oscillation side, are alternately arranged in the x-axis direction. In other words, a group consisting of the comb teeth 18 on the oscillation side and a group consisting of the comb teeth 19 on the fixed side oscillatably drive the scanning mirror 11 via the suspension beams 13A and 13B as an electrostatic capacity drive source.

In the meantime, a cavity 17 is formed at a portion corresponding to the scanning mirror 11 on the lower plate 10B in such a manner that the scanning mirror 11 and the suspension beams 13A and 13B can be oscillated on the upper plate 10A. Moreover, fixing pads 16A to 16H are formed in an island-like manner on the lower plate 10B in such a manner that the anchors 14A to 14H formed on the upper plate 10A are secured in laminating the upper plate 10A on the lower plate 10B.

In addition, on the lower plate 10B are formed numerous comb teeth 18B on the fixed side constituting the electrostatic capacity drive source by pairing with the comb teeth 18 on the oscillation side on the upper plate 10A.

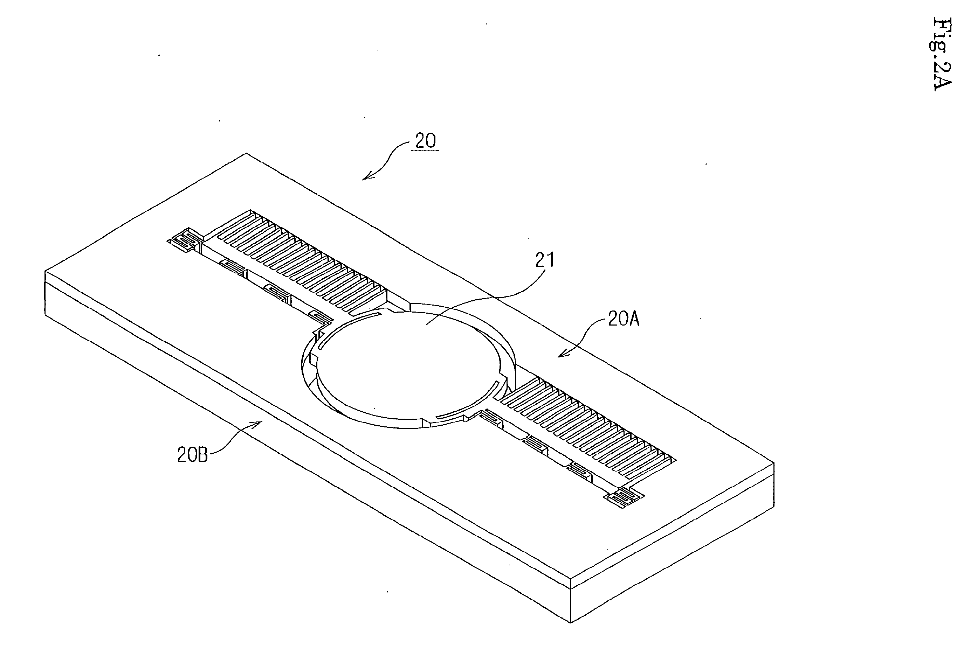

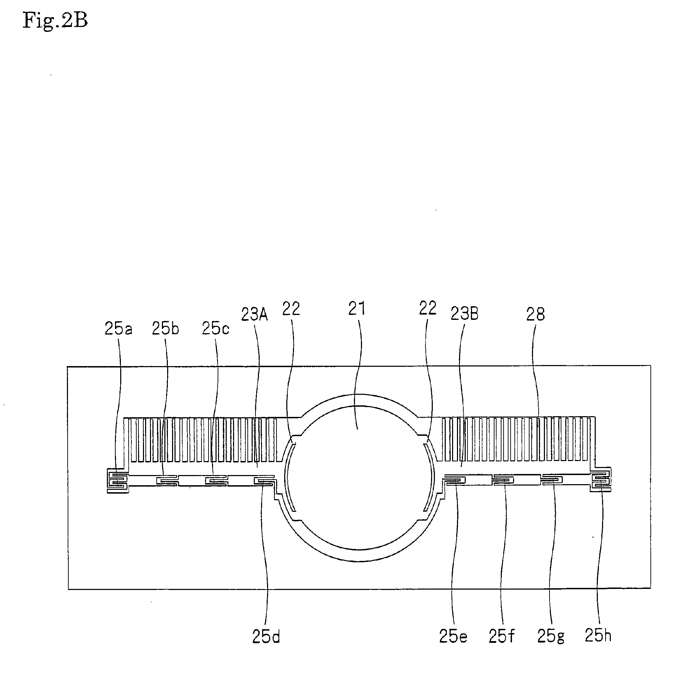

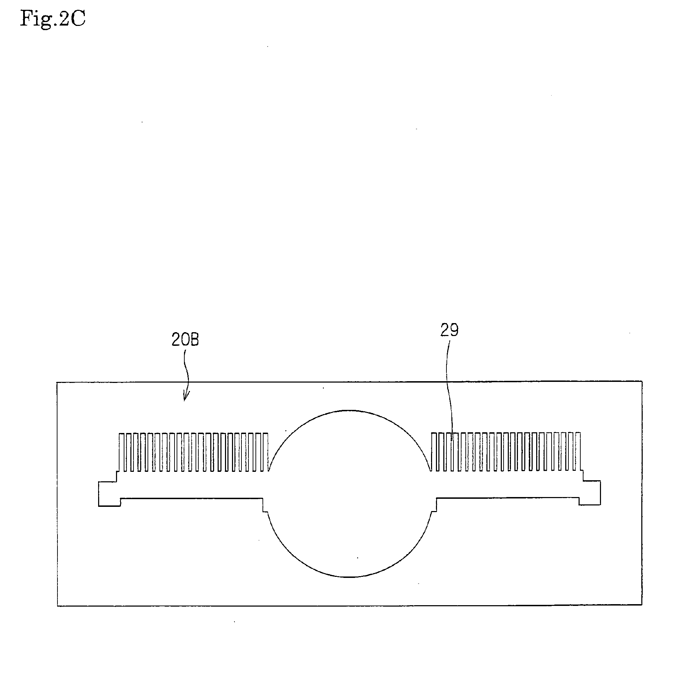

An MEMS device 20, in a constitutional example shown in Figs. 2A to 2C, is constituted by laminating an upper plate 20A and a lower plate 20B. On the upper plate 20A, a disk scanning mirror 21 is located at the center thereof, suspension beams 23A and 23B are disposed in a direction of an x-axis, i.e., an oscillation axis of the scanning mirror 21. In this manner, the scanning mirror 21 is supported by the suspension beams 23A and 23B via connecting portions 22.

The suspension beams 23A and 23B are connected at the ends thereof to the upper plate 20A via hinges 25a and 25h of an S-shaped, i.e., swirl-like torsion bar structure, respectively. Springs 25b to 25g of the same constitution are provided along one longitudinal side surface of each of the suspension beams 23A and 23B, to be connected to the upper plate 20A.

Comb teeth 28 on an oscillation side extending in a y-axis direction perpendicular to the x-axis, i.e., the oscillation axis are formed at the other longitudinal side surface of each of the suspension beams 23A and 23B. The comb teeth 28 on the oscillation side oscillatably drive the scanning mirror 21 via the suspension beams 23A and 23B as an electrostatic capacity drive source in cooperation with comb teeth 29 on a fixed side formed on the lower plate 20B.

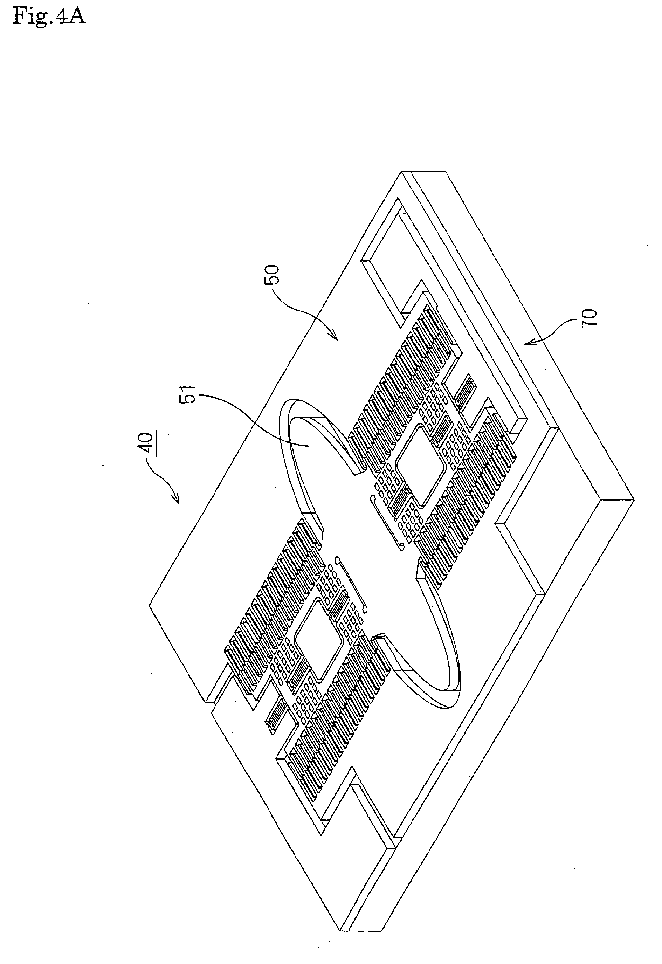

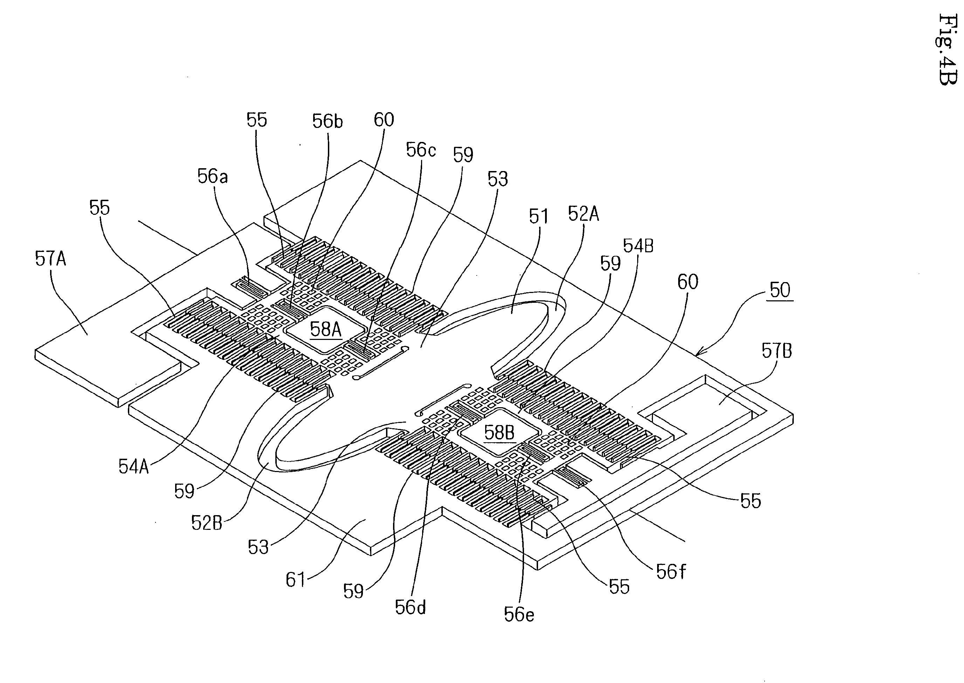

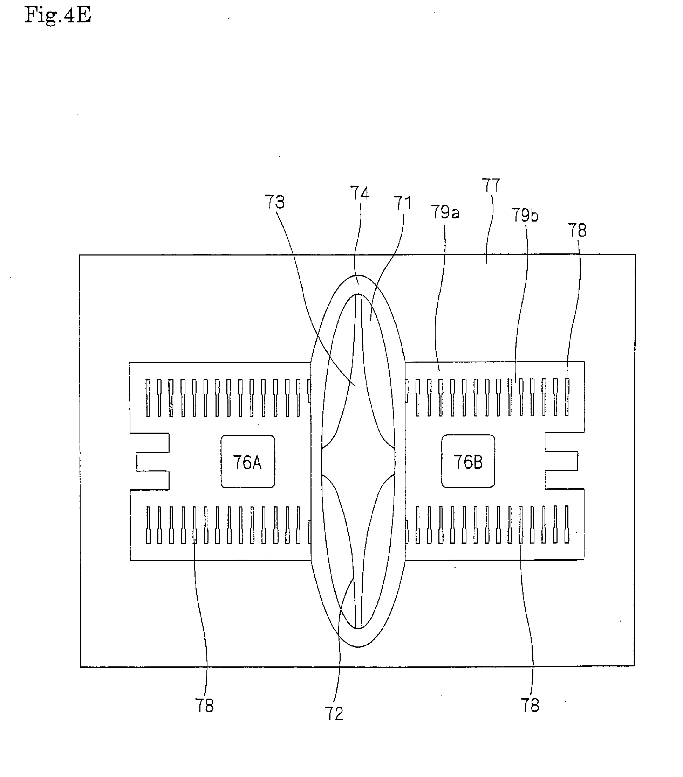

An MEMS device 40 in a preferred embodiment according to the present invention, as shown in Fig. 4A, is constituted by laminating an upper plate 50 and a lower plate 70 in a manner insulating from each other.

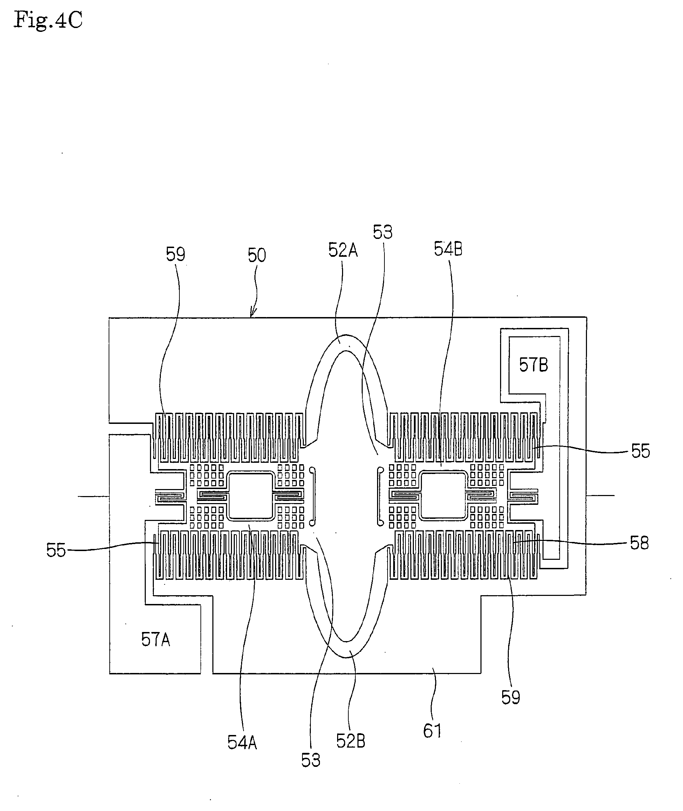

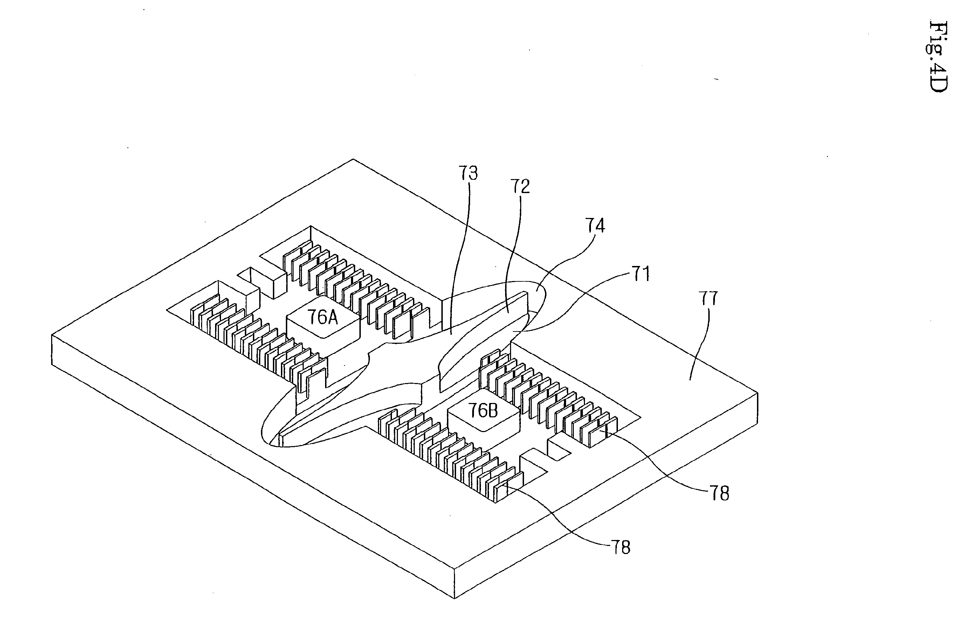

The particulars of the upper plate 50 are shown in Figs. 4B and 4C. On the upper plate 50 is formed a scanning mirror upper layer 51 into a prolate ellipsoid. At a reverse surface of the scanning mirror upper layer 51 are formed numerous fine and deep trenches, which are not shown.

The numerous trenches have the function of reducing a mass and dynamic deformation of the scanning mirror. That is to say, the optical resolution of the MEMS device 40 can be enhanced by minimizing the dynamic deformation as a whole. For example, it may be construed that although the trenches are disposed in parallel in a diametric direction of the prolate ellipsoid of the scanning mirror upper layer 51, it is effective in arranging on an outer peripheral side of the mirror separated in a direction of a rotational axis of the scanning mirror in accordance with a diametric direction of a short circle.

Incidentally, the width or depth of the numerous trenches is controlled to become a predetermined value at the same time when parts including the scanning mirror upper layer 51 are etched on the upper plate 50. Otherwise, the trenches may be etched at the surface of the scanning mirror upper layer 51 by covering the scanning mirror upper layer 51 except for the surface thereof.

The arrangement or number of trenches should be optimized by a finite element method. The scanning mirror upper layer 51 is separated from the upper plate 50 with gaps 52A and 52B. The width of each of the gaps 52A and 52B is designed in such a manner as to become greater than that of any part formed in other fine dimensions during a forming process of the upper plate 50 by etching.

The scanning mirror upper layer 51 is supported by suspension beams 54A and 54B via connecting portions 53 disposed in the diametric direction of the short circle. With the configuration of the scanning mirror upper layer 51 supported by the suspension beams 54A and 54B, the scanning mirror upper layer 51 is minimized in dynamic deformation. Furthermore, the shape or number of the connecting portions 53 is optimized by a finite element method.

Comb teeth 55 on an oscillation side are formed at the end surfaces thereof in a direction of a rotational axis of each of the suspension beams 54A and 54B arranged along the oscillation rotational axis. Each of the comb teeth 55 on the oscillation side is formed in such a manner that a rectangular cross-sectional shape on an oscillating tip end side becomes smaller than that at a base end side. A cross-sectional area is reduced in the above-mentioned manner, thereby reducing the weight of the comb tooth 55 on the oscillation side, so as to reduce the entire inertia mass.

The reduction of a structural inertia can achieve an increase in scanning speed of the device and a decrease in drive voltage quantity independently or at the same time. For example, a drive efficiency in an oscillation unit is enhanced by adjusting a drive frequency, thereby increasing a bias drive force owing to an electrostatic capacity of the comb teeth 55 on the oscillation side. In addition, the comb teeth 55 on the oscillation side can increase the electrostatic drive quantity for driving the scanning mirror. Furthermore, the comb teeth 55 on the oscillation side can provide both of the bias drive force and the mirror drive force owing to the electrostatic capacity.

The suspension beams 54A and 54B are connected to each other via hinges of an S-shaped, i.e., swirling-like torsion bar structure connected to pads formed on the lower plate 70. A centrifugal end of the suspension beam 54A is connected to an S-shaped hinge 56a connected to a pad 57A, and further, the suspension beam 54A is connected at the center thereof to S-shaped hinges 56b and 56c connected to a pad 58A.

In the same manner, a centrifugal end of the suspension beam 54B is connected to an S-shaped hinge 56f connected to a pad 57B, and further, the suspension beam 54B is connected at the center thereof to S-shaped hinges 56d and 56e connected to a pad 58B. The suspension beams 54A and 54B are connected to each other via the S-shaped hinges 56a to 56f dispersively arranged on the oscillation rotational axis set in the diametric direction of the short circle of the scanning mirror upper layer 51. The suspension beams 54A and 54B are reduced in mass thanks to holes 60 formed thereat.

Frequencies in all modes of a movable structure can be effectively classified by carefully adjusting the distribution of the rigidity and positional setting of the springs. A desired oscillation mode is designed at a lowest resonance frequency.

A principal resonance frequency is lowest and remote from the oscillation frequency of another structure. Therefore, the oscillation of the scanning mirror cannot induce any other unnecessary vibration mode.

The use of the plurality of springs can reduce the maximum pressure and tension of each of the springs less than those of the scanning mirror supported by conventional pair torsion beams. As a consequence, the pressure and tension of each of the springs can be reduced, so that the reliability of each of the springs can be enhanced, and further, an oscillation angle is increased.

On the upper plate 50 are formed the comb teeth 59 on a fixed side, which are dovetailed together with the comb teeth 55 on the oscillation side. The comb tooth 59 on the fixed side is tapered in the same manner as the comb tooth 55 on the oscillation side. The comb tooth 59 on the fixed side can enhance a drive efficiency with the application of a bias electrostatic force.

Moreover, the comb tooth 59 on the fixed side can drive the scanning mirror upper layer 51 with the application of an electrostatic drive force. In addition, both of the bias electrostatic force and the electrostatic drive force can be supplied to the comb tooth 59 on the fixed side. The comb teeth 59 on the fixed side are connected to an adhesive pad 61 mounted on the lower plate 70.

Figs. 4D to 4F show the particulars of the lower plate 70. The lower plate 70 includes a mirror lower layer 73 having a projection 72 formed on a prolate elliptic plate 71. A gap 74 is formed at the lower plate 70, so that the mirror lower layer 73 is separated from components disposed therearound. Fig. 4F shows a lower surface having a reflection surface of the prolate elliptic plate 71. Around the hole at the lower surface of the lower plate 70 are provided with marks 75 for positioning the mirror at the time of an assembling work.

The mirror upper layer 51 is bonded onto the mirror lower layer 73, thereby finally completing a scanning mirror. The scanning mirror has an I-beam structure, in which the mirror upper layer 51 constitutes an upper surface, the projection 72 constitutes a web, and the prolate elliptic plate 71 constitutes a lower surface.

The I-beam structure reduces most of the mass of the mirror, thereby strengthening the mirror. Therefore, this can minimize a dynamic deformation at the mirror lower layer. The minimization of the dynamic deformation at the mirror lower layer can improve the optical separation degree of the device. The I-beam structure can be refined by a finite element analysis.

The lower plate 70 has a surface for fixing the adhesive pad of a movable structure on the upper plate 50. In particular, fixing pads 76A and 76B are provided with fixing surfaces corresponding to the adhesive pads 58A and 58B, respectively. Furthermore, a fixing pad 77 is provided with a fixing surface corresponding to the adhesive pads 57A, 57B and 61.

In the lower plate 70 are formed comb teeth 78 on the fixed side, which are alternately dovetailed with the comb teeth 55 on the oscillation side on the upper layer outside of the layer. In other words, the comb teeth 78 and the comb teeth 55 are alternately dovetailed with each other, as viewed from top or when the mirror is oscillated. The comb tooth 78 on the fixed side is tapered in the same manner as the comb tooth 55 on the oscillation side.

A gap 79a is defined between the comb tooth 78 on the fixed side and the fixing pad 77. The gap 79a is wider than a gap 79b defined between the comb teeth 78 on the fixed side, and further, the gap 79a in the lower plate 70 is etched in a greater depth than the gap 79b. The deep gap 79a is set in such a manner that the comb tooth 55 on the oscillation side can be oscillated at a greater angle without any contact with the lower plate 70.

The comb teeth 78 on the fixed side can drive the scanning mirror with the application of the electrostatic drive force. Moreover, the comb teeth 78 on the fixed side can enhance the drive efficiency with the application of the bias electrostatic force. In addition, the comb teeth 78 on the fixed side can supply both of the bias electrostatic force and the electrostatic drive force. An electrostatic capacity between the comb teeth 55 on the oscillation side and the comb teeth 78 on the fixed side is utilized in detecting the position of the scanning mirror when the scanning mirror is driven.

Although the description has been given above of the MEMS mirror scanner configured such that the upper plate and the lower plate having the scanning mirror and the suspension beam disposed thereon are laminated one on another, it is understood that an MEMS mirror scanner should be constituted of only an upper plate including an electrostatic capacity drive source such as a constitution in which an electrode is arranged in a comb-tooth structure inside of one and the same substrate having the suspension beam and the scanning mirror formed thereon.

Here, in Figs. 1A to 1C, reference characters representing dimensions determining the shape are as follows:

a: size of the scanning mirror in the x-axis, i.e., vertical direction;
b: size of the scanning mirror in the y-axis, i.e., width direction;
c: width of the torsion hinge;
d: width on the comb tooth side;
L: length, i.e., developed length of one torsion hinge;
n: number of torsion hinges;
$n_c$: number of combs;
t: thickness of the substrate, wherein $t > c$;

w: comb cutout quantity;
$\delta$: gap between the electrodes in the drive unit;
$\theta$: oscillation angle;
K: (total) spring constant;
k: spring constant (per torsion hinge);
G: modulus of elasticity in shear;
Q: quality factor
$\alpha$: shape factor
$\beta$: shape factor
I: inertia efficiency around an oscillation axis;
$\tau$ mat: shear strength of a material;
freq: frequency to be required or a natural frequency;
$\varepsilon$: permittivity;
V: voltage;

and

$\lambda$: wave length of light.

Mathematical expressions of the shape of the scanning mirror are as follows.

(1) Natural frequency
In the case where the thickness t of the substrate is sufficiently greater than the vertical size a of the scanning mirror,

$$(n \times c^3/L) \propto I \times freq^2/G \ldots \text{Expression (1)}$$

Incidentally, the inertia efficiency I around the oscillation axis is expressed by Expression (2) in the case of a rectangular parallelepiped (2a·2b·t: namely, the size in the x-axis direction is represented by 2b and the thickness is represented by t), and further, it is expressed by Expression (3) in the case of an ellipse (2a·2b·t: namely, the thickness is represented by t).

$$I = 1/3 \cdot \rho \cdot a \cdot b \cdot t \ (4 \cdot a^2 + t^2) \ldots \text{Expression (2)}$$

$$I = 1/12 \cdot \rho \cdot a \cdot b \cdot t \ (3 \cdot a^2 + t^2) \ldots \text{Expression (3)}$$

(2) Restriction of strength of torsion hinge

$$(\beta/\alpha) \cdot Gx \ (c/L) \cdot \theta < \tau \ mat \ldots \text{Expression (4)}$$

(3) Oscillation angle

$$\theta \propto V \cdot (Q \cdot \varepsilon \cdot nc \cdot w \cdot t/\delta)^{1/2} \ldots \text{Expression (5)}$$

(4) Limitation of dynamic deformation
In the case of a rectangular mirror (2a $\times$ 2b $\times$ t), the dynamic deformation is expressed by Expression (6).

$$\lambda/3 > D$$

$$D \propto \text{freq}^2 \times a^5/t^2 \ldots \text{Expression (6)}$$

The natural frequency, which should be desirably higher, the oscillation angle, which should be desirably greater and the size of the scanning mirror, which should be desirably greater, are required for the MEMS mirror scanner. It is assumed that the requirements are satisfied by designing in as small dimensions as possible.

First of all, as to the requirements for the size of the mirror (a, b and l) and the natural frequency, $(n \times c^3/L)$ is determined as a numeric value in proportion to a square of a frequency based on Expression (1). At the same time, the strength of the torsion hinge need be satisfied, a lower limit value of L/c is determined as a numeric value in proportion to the oscillation angle based on Expression (4). Here, it is necessary to note that the values c and L contribute to the oscillation angle determined by the natural frequency and the strength of the material in a reverse direction. Simultaneously, the dynamic deformation is restricted by Expression (6). As a result, the square of the thickness should be greater than a resultant value obtained by multiplying $a^5 \times \text{freq}^2$ by a constant.

Moreover, it is found based on Expression (5) that the oscillation angle also is increased if a numeric value determined based on Expression (7) below is increased as a shape for generating a torque required for achieving a desired oscillation angle. Here, if the gap $\delta$ is fixed to a certain value with the limitation from the viewpoint of fabrication, the oscillation angle is increased according to the thickness t, the voltage V and the number of combs $n_c$.

$$D \propto nc \cdot w \cdot t/\delta \ldots \text{Expression (7)}$$

One of points to be noted is that a requirement for increasing the natural frequency and a requirement for increasing the size of the scanning mirror exert the same influence on a dimension to be designed based on the relational expression for determining the natural frequency.

Parameters to be designed are three: $(n \cdot c^3/L)$, c/L and $nc \times w \times t/\delta$. Dimensions to be determined are six: n, c, L, t, w and $n_c$. Here, the value $n_c$ falls within a predetermined range with restriction of n, c, L and t, which are restricted by four Expressions with the degree of freedom of design. This degree of freedom can minimize the entire size of the mirror scanner by an optimum design.

The minimization of the thickness t or the minimization of the length as an evaluation function, which is equivalent to the minimization of $n \cdot L$ or $n_c$, leads to so-called cost reduction, and therefore, the numeric value is significant.

From Expression (6), it is necessary to enlarge the area of the comb teeth, that is, increase the value $n_c \cdot w \cdot t/\delta$, in order to increase the oscillation angle $\theta$. In the case where it is necessary to increase the value $n \cdot c^3/L$ at the request of the natural frequency, it is found that the request for an increase in torque equivalent to a product of an increase in natural frequency and an increase in oscillation angle need be compensated by the thickness of the comb tooth, the comb tooth cutout quantity, the number of combs, an increase in voltage and a decrease in gap between the electrodes.

The present invention requires that a maximum distance (a/2) in the direction perpendicular to oscillation axis from the center of the oscillation axis of the scanning mirror is 1 mm or more, that is, the entire length of the mirror in a direction perpendicular to the oscillation axis of the scanning mirror is 2 mm or more, and the thickness of the mirror is 50 $\mu$m or more. The reason is that a scanning operation is achieved at a speed higher than by the polygon mirror scanner.

More preferably, the maximum distance (a/2) in the direction perpendicular to oscillation axis from the center of the oscillation axis of the scanning mirror is 2 mm or more, and further, the thickness of the mirror is 100 $\mu$m or more.

According to the present invention, a maximum distance (d) in the direction perpendicular to oscillation axis from the center of the oscillation axis in the drive unit in which the electrostatic capacity drive unit is disposed along either side or both sides of the suspension beam is set to 100% or less, preferably, 80% or less of the maximum distance (a/2) in the direction perpendicular to oscillation axis from the center of the oscillation axis of the mirror. In other words, the natural frequency is inversely proportional to the square of the polar inertia efficiency. However, the polar inertia efficiency at portions other than the scanning mirror is proportional to the cube of d in a first order. As a consequence, a contribution ratio per unit length can be suppressed to about 50% or less of the mirror, preferably, about 20% or less by setting d to 100% or less of a/2, preferably, 80% or less.

Additionally, it is desirable that the maximum distance in the direction perpendicular to oscillation axis from the center of the oscillation axis in the electrostatic capacity drive unit should be 40% or less of the maximum distance in the direction perpendicular to oscillation axis from the center of the oscillation axis of the scanning mirror. The reason has been already described above. In particular, when d is set to 40% or less of a/2, a shape can be achieved such that the contribution ratio per unit length is suppressed to 7% or less of the mirror.

Moreover, it is desirable that the mirror width in the direction of the oscillation axis of the scanning mirror should be smaller than the mirror length in the direction perpendicular to the oscillation axis of the scanning mirror: specifically, it should be desirably 50% or less of the mirror length (a). The reason is that the mirror length a is relevant to a resolution in a main scanning direction of a printer; the width dimension b is relevant to a resolution in a sub scanning direction of the printer; and the resolution in the main scanning direction is determined by the mirror length and the frequency. Furthermore, since the resolution in the sub scanning direction can be set lower than that in the main scanning direction in view of the function of the printer, the mirror width b is proportional to the polar inertia efficiency, as expressed by Expression (3). Consequently, it is desirable that the mirror width b should be set to 50% or less because both of the request for the resolution and the increase in natural frequency can be satisfied with an excellent balance.

In more details, it is preferable that the relationship between the mirror length (a) in the direction perpendicular to the oscillation axis of the scanning mirror and the mirror width (b) in the direction of the oscillation axis of the scanning mirror should be a $\geq$ b and a:b = (1.0-2.0):1, or a < b and a:b = 1:(1.001-2).

A rectangle, a rhombus, a polygon, a circle or an ellipse may be appropriately adopted as the shape of the scanning mirror. As to the shape, the polygon should be preferable to the rectangle or the rhombus, the ellipse should be much preferable to the circle, and further, a track should be even much preferable. That is to say, the rectangle is excessive from the viewpoint of no deviation of a spot of a laser beam from the mirror, and therefore, the natural frequency is reduced at a not-operating portion owing to a greater polar inertia efficiency. The circle is best from the viewpoint of the function but with an allowance since the resolution in the sub scanning direction can be set lower than that in the main scanning direction. The rhombus may raise problems of a partly loss of optical energy of a laser beam due to deviation of a spot of a laser beam at a tip and the reduction of the resolution. In view of this, the polygon and the track shape are preferable from the viewpoint of no deviation of the spot of the laser beam and the reduction of the polar inertia efficiency.

According to the present invention, the length in the direction of the oscillation axis of the suspension beam should be desirably greater than that of the mirror, and preferably, it should be 1.5 times or more the length of the mirror. Here, although the drive torque becomes excellent by increasing the number of comb teeth and the voltage in order to increase the oscillation angle based on Expression (6), it was confirmed by an experiment that the length in the direction of the oscillation axis of the suspension beam has been appropriately set to 1.5 times or more the length of the mirror in order to secure the number of comb teeth at a voltage which cannot induce any dielectric breakdown.

According to the present invention, at least one serpentine torsion hinge is provided at each of the suspension beams, thereby increasing the resonance frequency of the scanning mirror or controlling it to a required value.

As shown in the above-mentioned drawings, there may be adopted a configuration in which a serpentine torsion hinge is provided at an end of each of the suspension beams, that is, at a suspension beam end, on a side opposite to the scanning mirror; a configuration in which at least one serpentine torsion hinge is provided inside of the suspension beam; or a configuration in which the electrostatic capacity drive unit is disposed along either one side of each of the suspension beams while a plurality of serpentine torsion hinges are provided along the other side of each of the suspension beams.

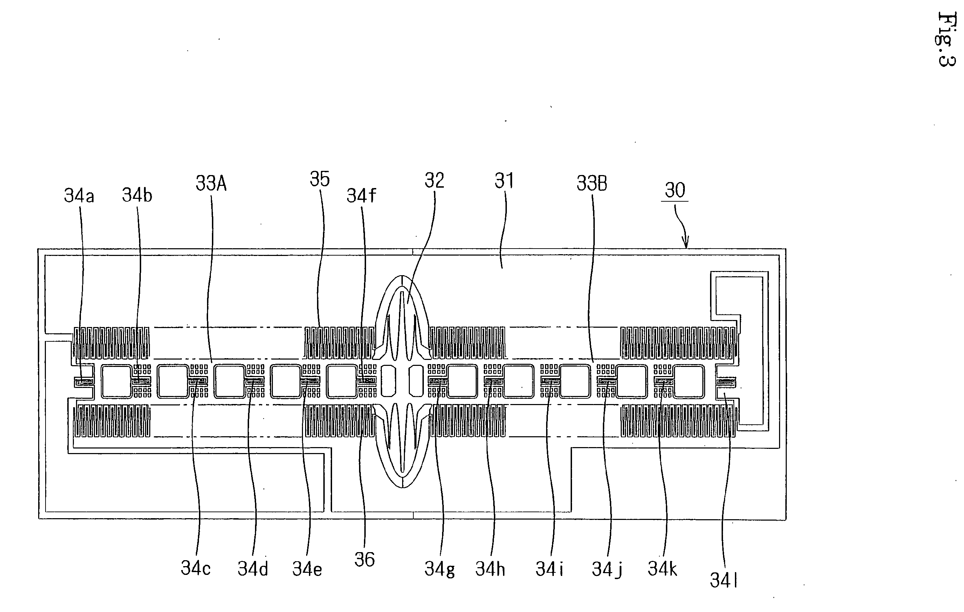

The serpentine torsion hinge provided in the suspension beam may be comprised such that one serpentine torsion hinge/spring is disposed with respect to one anchor, as shown in FIG. 3, and further, that two serpentine torsion hinges/springs are disposed on both sides of one anchor, as described in a preferred embodiment, thus producing advantages of an increase in resonance frequency together with the reduction of the length of the beam.

The beam width of the serpentine torsion hinge in the direction perpendicular to the oscillation axis of the scanning mirror should be desirably 140% or less than the thickness of the substrate. In other words, a minimum value of the thickness t is defined at the request of the oscillation angle expressed by Expression (5) and the dynamic deformation expressed by Expression (6), and further, a larger value is advantageous. In contrast, since a stress is proportional to the hinge width c based on Expression (4), a smaller value is advantageous from the viewpoint of the strength. As a result, it was confirmed by an experiment that in the case where the hinge width c was set to 140% or less of the thickness t, the relationship therebetween was proper.

The electrostatic drive type MEMS mirror scanner in the preferred embodiment is featured by three or more serpentine torsion hinges/springs to be disposed in the suspension beam.

According to the present invention, providing mass reducing means at both or either of a non-reflection reverse surface of the scanning mirror and each of the suspension beams is effective in controlling the resonance frequency in a movable unit or taking a dynamic balance. The mass reducing means is appropriately selected from numerous fine through pores or holes or a multiple trench rib structure, a honeycomb structure or a lateral H type (i.e., I-beam) structure, as viewed in cross section, at a required portion according to a target and installation portion. Otherwise, there may be provided inertial efficiency reducing means. For example, the inertial efficiency can be reduced at a portion concerned by reducing a mass at a certain portion, and at the same time, increasing a mass at another portion, thereby producing an effect of an increase in frequency or an increase in oscillation angle without any change in total mass.

The MEMS mirror scanner may be constituted of a single substrate, or a lamination of substrates made of the same material or different materials. For example, the electrostatic capacity drive unit may be variously constituted of a comb tooth-like structure which is formed in the direction perpendicular to the oscillation axis of the scanning mirror inside of the same substrate as the suspension beam and is laminated on another substrate having the driving or controlling electrode arranged thereon; a comb tooth-like structure which is formed inside of the same substrate having the suspension beam and the scanning mirror disposed thereon, houses the electrode therein, and the substrate is supported by another member; a structure in which the substrate having the suspension beam and the scanning mirror disposed thereon and acting as the upper plate is laminated on the other substrate having a space pattern formed in a required shape and acting as the lower plate, and an oscillation space for the mirror is defined on the side of the lower plate; and a structure in which the electrostatic capacity drive unit on the upper plate may be constituted in a comb tooth-like structure inside of the same substrate as the suspension beam, and further, inside of the lower plate is provided a comb tooth-like structure paired with the comb tooth-like structure on the upper plate.

According to the present invention, although the material, thickness or constitution of the substrate in use is not limited, it is desirable that the thickness should be 0.05 mm or more in order to achieve the scanning operation at a high speed, and therefore, a single-layer substrate or a laminated substrate may be appropriately adopted. In addition, the scanning mirror may be constituted of a film or a stuck layer at the surface thereof. Otherwise, a known silicon substrate, a silicon substrate having or a laminated layer or a glass substrate may be used.

In the case where the MEMS mirror scanner is constituted of one substrate, the thickness of the substrate having the suspension beam and the scanning mirror disposed thereon is desirably equal to or more than that of the scanning mirror. In the meantime, in the case where a laminated structure is adopted, the thickness of the substrate having the suspension beam and the scanning mirror disposed thereon is desirably equal to or less than that of the scanning mirror.

According to the present invention, the shape of each of the component parts can be designed without any consideration to a viscosity of air or the like by adopting a configuration, in which all of the movable units such as the suspension beam, the scanning mirror and the electrostatic capacity drive unit are disposed in a vacuum atmosphere, or a resistance reducing constitution for increasing the amplitude of the oscillation angle of the mirror.

In the electrostatic drive type MEMS mirror scanner according to the present invention, the single oscillation of the scanning mirror can take performance such as 20.5° (+10°, -5°) by adopting a preferred embodiment.

The electrostatic drive type MEMS mirror scanner according to the present invention, in which the mirror oscillatably supported by the suspension beam is formed on the target semiconductor substrate, may be fabricated by surface micro machining, in which thin films made of various kinds of materials are patterned or laminated on the substrate, etching the substrate per se, or bulk micro machining together with film formation.

Although the comb tooth type electrode configuration has been described as an electrostatic capacity device for a drive source in the electrostatic drive type MEMS mirror scanner according to the present invention, a flat type electrode configuration may be adopted for positioning or correcting the mirror as an auxiliary configuration.

In order to first apply a DC voltage to the electrostatically driving comb tooth type electrode in such a manner as to accord with or approximate to the resonance frequency of a micro mirror in the electrostatic drive type MEMS mirror scanner according to the present invention, a DC voltage value has been previously obtained to be then set in voltage control means, and thereafter, an AC voltage can be applied between the driving electrodes for oscillatably driving the mirror.

The natural resonance frequency of the scanning mirror is determined by the configuration of the suspension beam. Furthermore, the DC voltage value should be desirably determined in consideration of the degree of resonance, the maximum oscillation angle and the oscillation range under various conditions such as a spring constant of a rotary shaft of the mirror, an expected pattern of an oscillating motion of the mirror and a required oscillation of the mirror, that is, a turning angle.

**Preferred Embodiments**

**Example 1**

An electrostatic drive type MEMS mirror scanner adopting the same configuration as that shown in Fig. 1 was fabricated with dimensions and properties shown in Table 1.

As a result, the resonance frequency of the scanning mirror was 1,500 Hz and the oscillation angle, i.e., a single oscillation of a mechanical oscillation angle was $\pm 15°$.

Incidentally, physical values of the silicon substrate were as follows:

Density: $2.33 \times 10^3$ kg/m$^3$ ($0.238 \times 10^{-9}$ kgw·sec$^2$/mm$^4$);

Modulus of elasticity: 150 Gpa (15000 kgf/mm$^2$, 15300 kgf/mm$^2$);
Modulus of elasticity in shear: G = E/2/(1+v) = 6.538 (kgf/mm$^2$); and
Poisson ratio: 0.22.

**Example 2**

An electrostatic drive type MEMS device 30 shown in FIG. 3 basically adopted the same configuration as that shown in Fig. 1. A scanning mirror 32 mounted on an upper plate 31 was formed into a prolate ellipsoid. Each of suspension beams 33A and 33B adopted six torsion hinges 34a to 34f and 34g to 341 including hinge type torsion bars 34a and 341 at the ends thereof, respectively, and further, included groups 35 and 36 of comb teeth, respectively. In Example 2, the torsion hinges near the mirror 32 were the same, but three torsion hinges having two turn springs with respect to one anchor except for the hinge type torsion bars at the ends were provided, thus fabricating a configuration having the eight torsion hinges in total.

As a result, the resonance frequency of the scanning mirror was 2,000 Hz and the oscillation angle, i.e., the single oscillation of the mechanical oscillation angle was ±16.25°.

Example 3

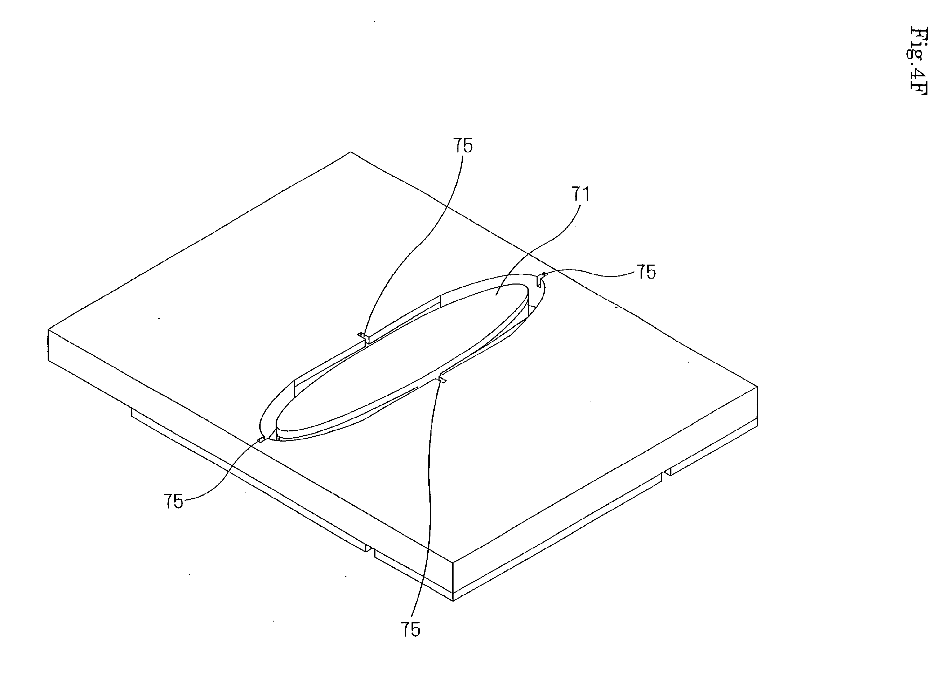

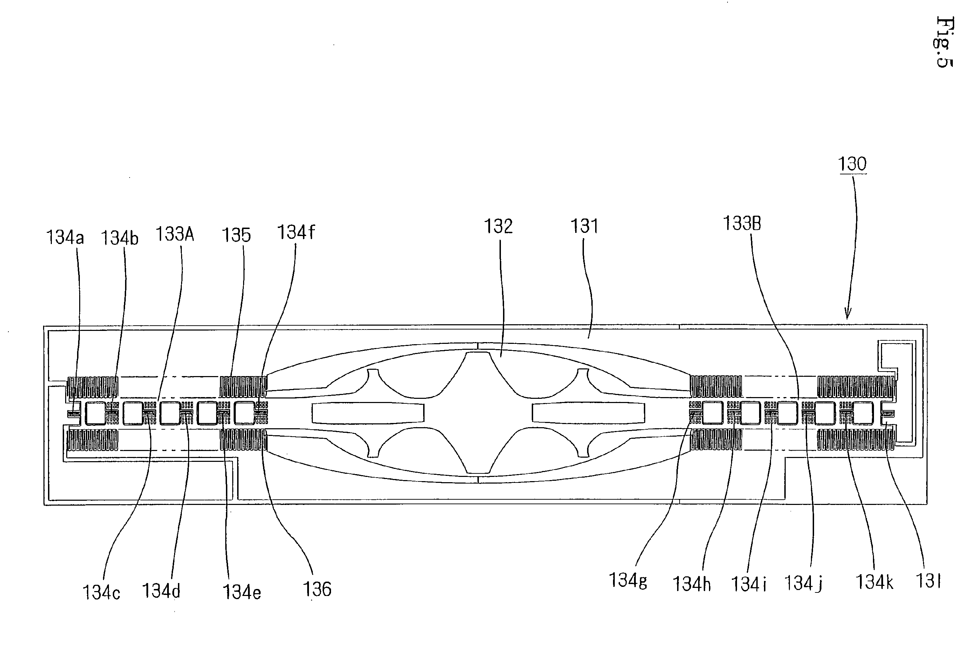

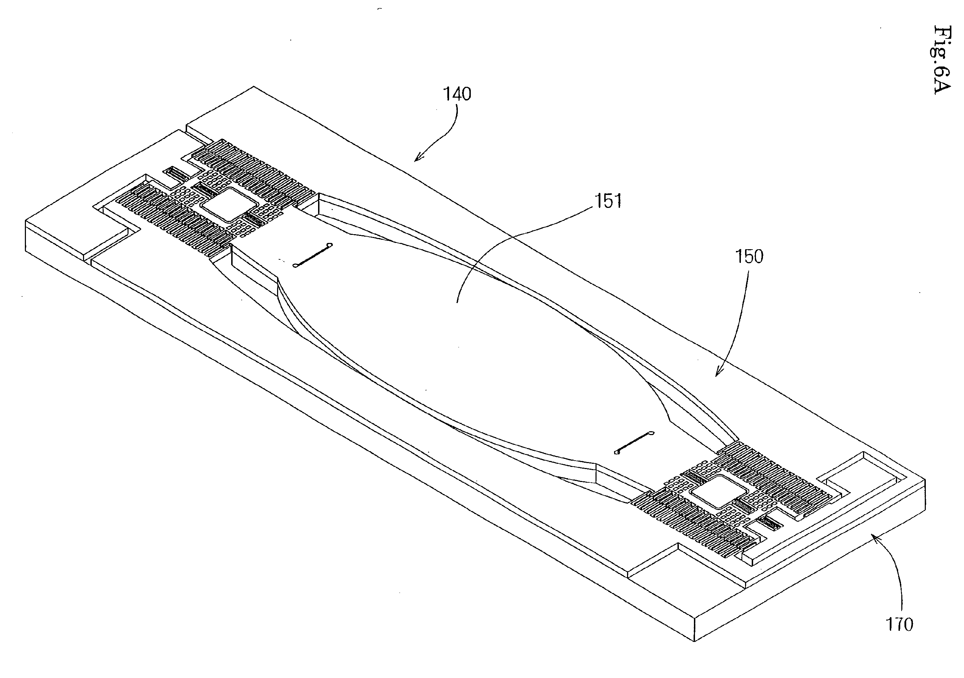

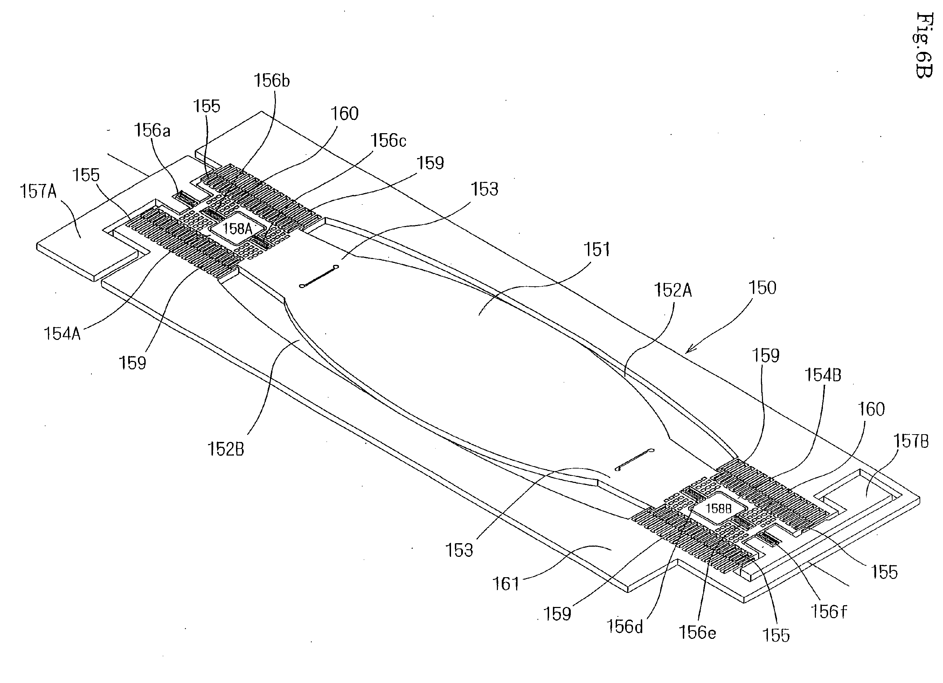

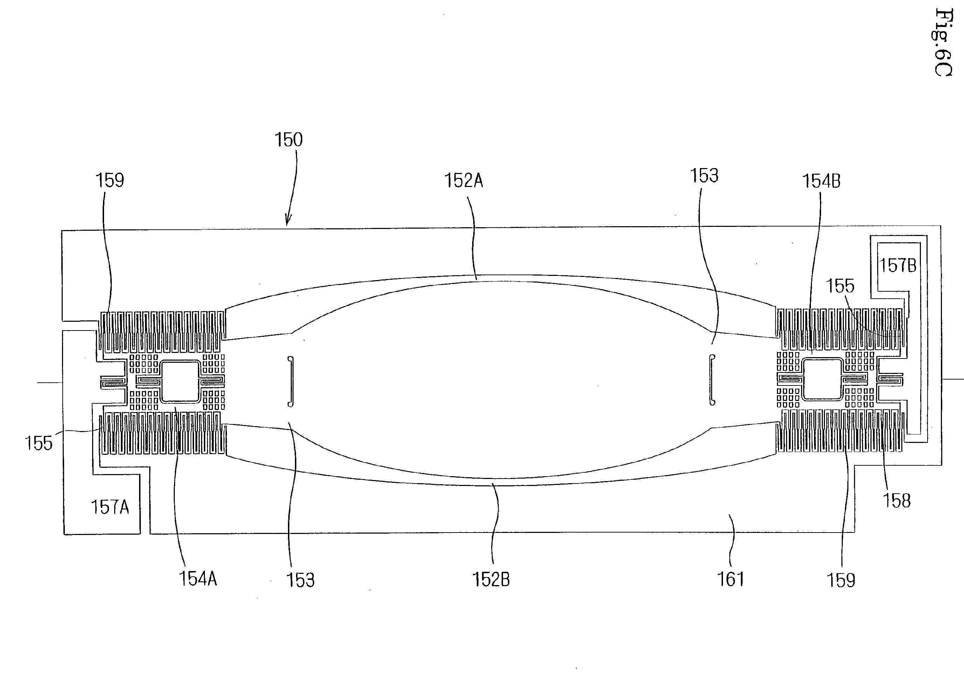

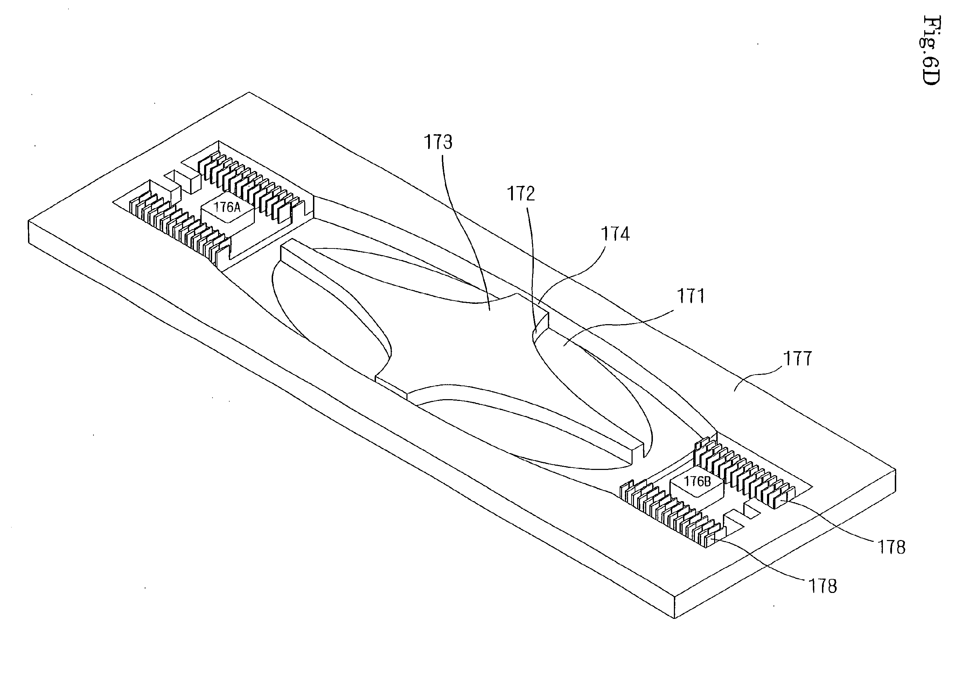

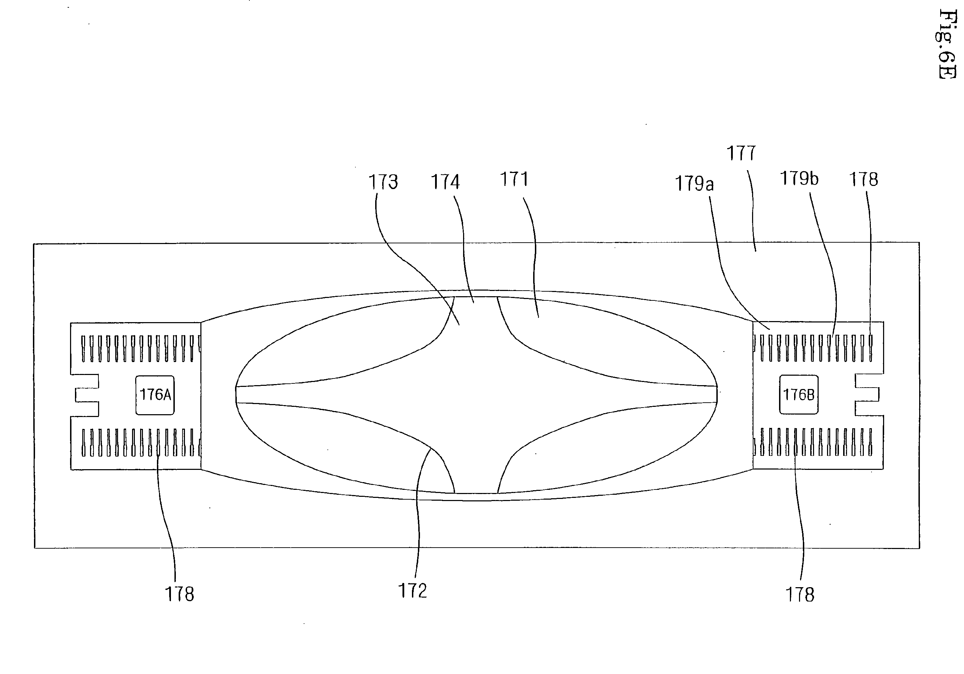

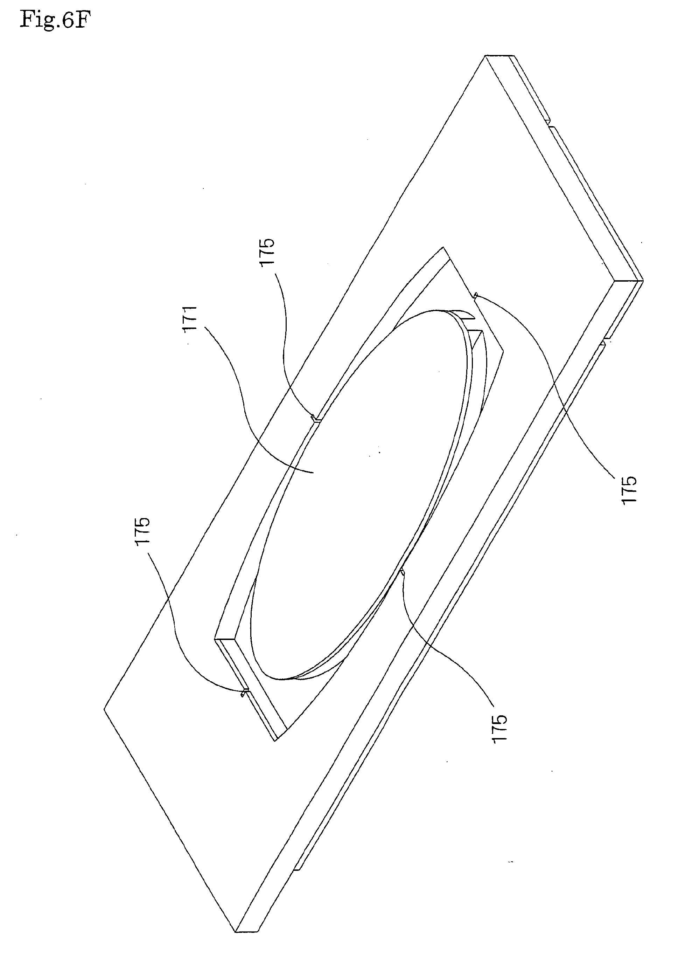

An electrostatic drive type MEMS device shown in Figs. 5 and 6 basically adopted the same configuration as that shown in Fig. 1. A scanning mirror 132 mounted on an upper plate 131 was formed into a prolate ellipsoid longer in a direction of each of suspension beams 133A and 133B.

[Table 1]

The electrostatic drive type MEMS mirror scanner according to the present invention is used in a bar code reader, a laser printer, a confocal microscope, an optical fiber/network constituent member, a projecting display for a projector, a back projection TV, a mountable display, a vehicle-mounted laser radar and a military laser seeking/guided system.

The electrostatic drive type MEMS mirror scanner according to the present invention has the structure for supporting the flexible scanning mirror, which can be driven even by the drive force of the small electrostatic force, and further, the electrostatic capacity drive unit is disposed along the long suspension beam, so as to secure the sufficient electrostatic capacity. Therefore, the polygon mirror scanner can be replaced by the electrostatic drive type MEMS mirror scanner according to the present invention. In particular, a large sized mirror in conformity with the shape of a laser beam in the form of the ellipse or the prolate ellipsoid for use in the laser printer can be driven at a resonance frequency of 1.5 kHz or more and an oscillation of ±15° or more, thus achieving the performance of 300 dpi and 600 dpi required in the laser printer.

**Claims**

1.  An electrostatic drive type MEMS mirror scanner comprising:

    a pair of suspension beams formed like a bar and arranged on the same straight line on substrate;
    a scanning mirror formed between the suspension beams and oscillatably supported on the straight line acting as an oscillation axis i.e. a y-axis; and
    an electrostatic capacity drive unit disposed along either side or both sides of the suspension beams; and wherein a maximum distance (a/2) of the scanning mirror from the oscillation axis, in a direction perpendicular to the oscillation axis i.e. an x-axis direction, is 1 mm or more;
    a thickness of the mirror is 50 μm or more; and
    a maximum distance (w) of the electrostatic capacity drive unit from the oscillation axis, in the direction perpendicular to the oscillation axis, is 100% or less of the maximum distance <u>(a)</u> in the direction perpendicular to the oscillation axis.

2.  The electrostatic drive type MEMS mirror scanner according to claim 1, wherein the maximum distance (w) of the electrostatic capacity drive unit from the oscillation axis, in the direction perpendicular to the oscillation axis, is 60% or less of the maximum distance (a/2) in the direction perpendicular to the oscillation axis.

3.  The electrostatic drive type MEMS mirror scanner according to claim 1, wherein the relationship between the length (a) of the scanning mirror in the direction perpendicular to the oscillation axis of the scanning mirror and the width (b) of the mirror in the direction of the oscillation axis of the scanning mirror is expressed as follows:

$a \geq b$ and $a:b = (1.0 \text{ to } 2.0):1$; or
$a < b$ and $a:b = 1:(1.001 \text{ to } 2)$.

4. The electrostatic drive type MEMS mirror scanner according to claim 1, wherein the scanning mirror is formed into a rectangular shape, a rhombus shape, a polygonal shape, a circular shape or an elliptic shape.

5. The electrostatic drive type MEMS-mirror scanner according to claim 1, wherein the length of the suspension beams in the direction of the oscillation axis is 1.5 times or more the scanning mirror length (a).

6. The electrostatic drive type MEMS mirror scanner according to claim 1, wherein a connection formed holes is provided between each of the suspension beams and the scanning mirror.

7. The electrostatic drive type MEMS mirror scanner according to claim 1, wherein a torsion hinge is provided at the end of each of the suspension beams on a side opposite to the scanning mirror.

8. The electrostatic drive type MEMS mirror scanner according to claim 1, wherein each of the suspension beams includes therein at least one torsion hinge.

9. The electrostatic drive type MEMS mirror scanner according to claim 8, wherein the torsion hinge is provided with a serpentine torsion hinge/spring with respect to one anchor, or a plurality of serpentine torsion hinges/springs are provided on both sides of one anchor.

10. The electrostatic drive type MEMS mirror scanner according to claim 1, wherein an electrostatic capacity drive unit is disposed along one side of each of the suspension beams, and further, a plurality of torsion hinges are provided along the other side of each of the suspension beams.

11. The electrostatic drive type MEMS mirror scanner according to any one of claims 7 to 10, wherein the number of torsion hinges to be disposed in the suspension beams is three or more.

12. The electrostatic drive type MEMS mirror scanner according to any one of claims 7 to 11, wherein a beam width of the torsion hinge in the direction perpendicular to the oscillation axis of the scanning mirror is 140% or less of the thickness of the substrate.

13. The electrostatic drive type MEMS mirror scanner according to claim 1, wherein a non-reflection reverse surface of the scanning mirror and/or the suspension beams are reduced mass or inertia efficiency.

14. The electrostatic drive type MEMS mirror scanner according to claim 13, wherein the mass reducing means is any one of a through pore, a hole and a multiple trench rib structure and a combination thereof.

15. The electrostatic drive type MEMS mirror scanner according to claim 1, wherein the electrostatic capacity drive unit is comprised in a comb tooth-like structure, formed in the direction perpendicular to the oscillation axis of the scanning mirror, inside of the same substrate as that for the suspension beams, and further, is laminated on another substrate, on which a driving or controlling electrode is mounted.

16. The electrostatic drive type MEMS mirror scanner according to claim 1, wherein the electrostatic capacity drive unit is comprised in a comb tooth-like structure inside of the same substrate, on which the suspension beams and the scanning mirror are formed, and further, an electrode is housed inside of the structure.

17. The electrostatic drive type MEMS mirror scanner according to claim 1, wherein the substrate having the suspension beams and the scanning mirror formed thereon and acting as an upper plate is laminated on another substrate having a space pattern formed into a required shape and acting as a lower plate, and further, an oscillation space for the mirror is defined on a side of the lower plate.

18. The electrostatic drive type MEMS mirror scanner according to claim 17, wherein the electrostatic capacity drive unit on the upper plate is comprised in a comb tooth-like structure, formed in the direction perpendicular to the oscillation axis of the scanning mirror, inside of the same substrate as that for the suspension beams, and further, another comb tooth-like structure paired with the comb tooth-like structure of the upper plate is provided inside of the lower plate, on which the electrostatic capacity drive unit is disposed.

19. The electrostatic drive type MEMS mirror scanner according to any one of claims 15 to 17, wherein the substrate having the suspension beams and the scanning mirror formed thereon is a single layer substrate or a laminated substrate.

20. The electrostatic drive type MEMS mirror scanner according to claim 15 or claim 16, wherein the thickness of the substrate having the suspension beams and the scanning mirror formed thereon is equal to or greater than that of the scanning mirror.

21. The electrostatic drive type MEMS mirror scanner according to claim 17, wherein the thickness of the substrate having the suspension beams and the scanning mirror formed thereon is equal to or smaller than that of the scanning mirror.

22. The electrostatic drive type MEMS mirror scanner according to any one of claims 15 to 17, wherein the scanning mirror has a film or a laminated layer at the surface thereof.

23. The electrostatic drive type MEMS mirror scanner according to claim 1, wherein all of movable units including the suspension beams, the scanning mirror and the electrostatic capacity drive unit are set in a vacuum atmosphere.

24. The electrostatic drive type MEMS mirror scanner according to claim 1, wherein a single oscillation at a mechanical oscillation angle of the scanning mirror is 20.5° (+10°, -5°).

Fig.1A

Fig.1B

## Fig.1C

Fig.2A

Fig.2B

Fig.2C

20B                                    29

Fig.3

## Fig.4A

Fig.4B

Fig.4C

Fig.4D

Fig.4E

Fig.4F

Fig.5

Fig.6A

Fig.6B

Fig.6C

EP 1 746 452 A1

Fig.6D

Fig.6E

178
179b
177
179a
176B
178
171
174
173
172
176A
178
178

Fig.6F

175

171

175

175

175

## INTERNATIONAL SEARCH REPORT

| | International application No. |
|---|---|
| | PCT/JP2005/008621 |

**A. CLASSIFICATION OF SUBJECT MATTER**
Int.Cl$^7$  G02B26/10, B41J2/44, B81B3/00, H04N1/113

According to International Patent Classification (IPC) or to both national classification and IPC

**B. FIELDS SEARCHED**

Minimum documentation searched (classification system followed by classification symbols)
Int.Cl$^7$  G02B26/10, B41J2/44, B81B3/00, H04N1/113

Documentation searched other than minimum documentation to the extent that such documents are included in the fields searched
Jitsuyo Shinan Koho          1922-1996    Jitsuyo Shinan Toroku Koho    1996-2005
Kokai Jitsuyo Shinan Koho    1971-2005    Toroku Jitsuyo Shinan Koho    1994-2005

Electronic data base consulted during the international search (name of data base and, where practicable, search terms used)
JSTPlus(JOIS), IEEE

**C. DOCUMENTS CONSIDERED TO BE RELEVANT**

| Category* | Citation of document, with indication, where appropriate, of the relevant passages | Relevant to claim No. |
|---|---|---|
| Y<br>A | R.A. CONANT et al., Dynamic deformation of scanning mirrors, Optical MEMS, 2000 IEEE/LEOS International Conference, 24 August, 2000 (24.08.00), pages 49, 50 | 1-9,12-24<br>10,11 |
| Y<br>A | P.R. PATTERSON et al., A SCANNING MICROMIRROR WITH ANGULAR COMB DRIVE ACTUATION, Micro Electro Mechanical Systems, 2002. The 15th IEEE International Conference, 24 January, 2002 (24.01.02), pages 544 to 546 | 1-9,12-24<br>10,11 |
| Y | JP 2003-66361 A  (Ricoh Co., Ltd.), 05 March, 2003 (05.03.03), Column 4, lines 39 to 50 & US 2003/0053156 A1 Par. No. [0078] | 1-9,12-24 |

[X] Further documents are listed in the continuation of Box C.          [ ] See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 09 August, 2005 (09.08.05) | 20 September, 2005 (20.09.05) |

| Name and mailing address of the ISA/<br>Japanese Patent Office | Authorized officer |
|---|---|
| Facsimile No. | Telephone No. |

Form PCT/ISA/210 (second sheet) (January 2004)

**INTERNATIONAL SEARCH REPORT**

| International application No. |
| --- |
| PCT/JP2005/008621 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 2002-131685 A (The Nippon Signal Co., Ltd.), 09 May, 2002 (09.05.02), Par. Nos. [0024] to [0027] & US 2002/0149072 A1 Par. Nos. [0038] to [0044] & EP 1255150 A1 & WO 02/035275 A1 & TW 552186 B | 6,13,14 |
| Y | JP 2003-57586 A (Brother Industries, Ltd.), 26 February, 2003 (26.02.03), Par. Nos. [0028] to [0030], [0033] (Family: none) | 7-9,23 |
| A | JP 2003-529312 A (ONIX MICROSYSTEMS, INC.), 30 September, 2003 (30.09.03), Full text; all drawings & WO 01/073934 A2 | 10,11 |
| E,X | JP 2005-70791 A (Adovansudo Nano Shisutemuzu Inc.), 17 March, 2005 (17.03.05), Full text; all drawings & US 2005/0045727 A1 & DE 102004037833 A1 | 1,3-11, 15-22,24 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5119279 A
- JP 2002311376 A
- JP 2003015064 A
- JP 2003270558 A